# EUROPÄISCHE PATENTSCHRIFT

(11) **EP 1 081 237 B1**
(45) Veröffentlichungstag und Bekanntmachung des Hinweises auf die Patenterteilung: **27.07.2005**
(21) Anmeldenummer: 00117803.7
(22) Anmeldetag: 18.08.2000
(51) Int. Cl.: C21D 8/10, C21D 9/08, B60G 21/05, C21D 1/25, B60G 21/055

(54) **Verfahren zur Herstellung eines biegesteifen, torsionsweichen Rohrprofils**
Process for manufacturing a tubular profile resistant to bending and flexible in torsion
Procédé pour la fabrication d'un profilé tubulaire rigide en flexion et déformable en torsion

(30) Priorität: 02.09.1999 DE 19941993
(43) Veröffentlichungstag der Anmeldung: 07.03.2001
(60) Teilanmeldung: 04026628.0
(73) Patentinhaber: BENTELER AG, D-33104 Paderborn (DE)
(72) Erfinder: Streubel, Wolfgang, 32756 Detmold (DE); Christophliemke, Wigbert, 33758 Schloss Holte (DE)
(74) Vertreter: Bockermann, Rolf, Dipl.-Ing.

(56) Entgegenhaltungen:
- EP-A- 0 752 332
- EP-A- 0 753 597
- US-A- 3 492 116
- US-A- 4 173 501
- US-A- 4 526 628
- US-A- 4 533 402
- PATENT ABSTRACTS OF JAPAN Bd. 1996, Nr. 03, 29. März 1996 (1996-03-29) & JP 07 292412 A (NIPPON STEEL CORP;OTHERS: 02), 7. November 1995 (1995-11-07)
- PATENT ABSTRACTS OF JAPAN Bd. 1996, Nr. 07, 31. Juli 1996 (1996-07-31) & JP 08 060294 A (KOBE STEEL LTD), 5. März 1996 (1996-03-05)
- PATENT ABSTRACTS OF JAPAN Bd. 017, Nr. 309 (C-1070), 14. Juni 1993 (1993-06-14) & JP 05 025546 A (NIPPON STEEL CORP), 2. Februar 1993 (1993-02-02)

## Beschreibung

Es sind diverse Vorschläge bekannt geworden, wie der Querträger einer Verbundlenkerhinterachse eines Personenkraftwagens ausgestaltet werden soll, um diesen auf der einen Seite biegesteif, auf der anderen Seite aber auch ausreichend torsionsweich zu gestalten. Hierzu zählen beispielsweise die Vorschläge der EP 0 249 537 B1, der EP 0 681 932 A2, der EP 0 752 332 B1, des DE-GM's 297 20 207 der US-PS 2,069,911, und der EP 0 753 595.

Allen diesen Querträgern ist jedoch die Eigenschaft zu eigen, dass ihre Fertigung insgesamt aufwendig ist und daher die Gestehungskosten im Rahmen einer kompletten Verbundlenkerhinterachse hoch sind.

Der Erfindung liegt ausgehend vom Stand der Technik die Aufgabe zugrunde, ein Verfahren zur Herstellung eines biegesteifen torsionsweichen Rohrprofils als Querträger für eine Verbundlenkerhinterachse eines Personenkraftwagens vorzuschlagen, das nicht nur ein erhöhtes wirtschaftliches Ausbringen gewährleistet, sondern auch im Hinblick auf die jeweils gestellten Anforderungen erlaubt, die einzelnen Verfahrensparameter weitgehend variabel zu gestalten.

Die Lösung dieser Aufgabe besteht in den Merkmalen des Patentanspruchs 1.

Danach gelangt nunmehr bei der Herstellung eines Rohrprofils als Querträger für eine Verbundlenkerachse ein Rohr gleich welchen Querschnitts aus einem Vergütungsstahl zur Anwendung. Zunächst wird das Rohr unter Sicherstellung torsionssteifer Endabschnitte durch eine U-förmige Kaltverformung im mittleren Längenabschnitt torsionsweich gestaltet. Die Ausbildung der Endabschnitte kann hierbei beliebig sein. Sie kann kreisförmig oder auch schuhförmig sein, gegebenenfalls unter Eingliederung von Stegblechen. Auch Versteifungssicken können in den Übergangsabschnitten zwischen dem U-förmig gestalteten mittleren Längenabschnitt und den Endabschnitten vorgesehen werden.

Nach der Kaltverformung wird das nunmehr vorliegende Rohrprofil einer Warmbehandlung unterzogen, bei welcher es zunächst mindestens in Teilbereichen bei einem Temperaturniveau zwischen 850 °C und 960 °C geglüht wird. Unter Teilbereiche werden hierbei bevorzugt die Endabschnitte des Rohrprofils verstanden. Danach wird das Rohrprofil mit einer oberhalb des AC3-Punkts im Eisen-Kohlenstoff-Diagramm liegenden Temperatur in Wasser gehärtet und danach mit einer Temperatur zwischen 200 °C und 550 °C über einen Zeitraum von > 5 Minuten angelassen.

Ein derart ausgebildetes und warmbehandeltes Rohrprofil weist dann insbesondere eine hohe Dauerfestigkeit unter dynamischer Belastung auf, wie sie gerade für ein in Rede stehendes Torsionsprofil als Bestandteil der Verbundlenkerhinterachse eines Personenkraftwagens angestrebt wird.

Im Anschluss an die Warmbehandlung wird das Rohrprofil wenigstens einer äußeren Oberflächenverfestigung unterzogen. Hierbei handelt es sich bevorzugt um eine mechanische Oberflächenverfestigung. Gegebenenfalls kann es zusätzlich auch im Inneren, insbesondere mechanisch, oberflächenverfestigt werden.

Letztlich wird das derart hergestellte Rohrprofil der Weiterkonfiguration zur Fertigstellung einer Verbundlenkerhinterachse zugeführt.

Eine besonders vorteilhafte Ausgestaltung der vorstehend erläuterten Variante wird in den Merkmalen des Patentanspruchs 2 erblickt, bei welcher das Rohrprofil bei einem Temperaturniveau zwischen 920 °C und 950 °C, insbesondere etwa 930 °C, geglüht wird.

In diesem Zusammenhang ist es dann darüber hinaus entsprechend den Merkmalen des Patentanspruchs 3 von Bedeutung, wenn das geglühte Rohrprofil mit einer Temperatur von etwa 280 °C über einen Zeitraum von ca. 20 Minuten angelassen wird.

Im Rahmen der Erfindung ist es ferner von besonderem Vorteil, wenn nach Patentanspruch 4 bei der Herstellung des Rohrprofils als Querträger einer Verbundlenkerhinterachse ein Rohr mit der Werkstoffqualität 22MnB5 verwendet wird.

Als besonders vorteilhaft wird angesehen, wenn entsprechend den Merkmalen des Patentanspruchs 5 die Warmbehandlung des kaltverformten Rohrprofils in den Übergangsabschnitten zwischen dem U-förmig umgeformten mittleren Längenabschnitt und den torsionssteifen Endabschnitten durchgeführt wird.

Schließlich ist es noch von Vorteil, wenn die Oberflächenverfestigung des Rohrprofils gemäß Patentanspruch 6 durch Bestrahlen mit Kugeln, insbesondere mit Stahlkugeln, erfolgt.

Die Erfindung ist nachfolgend anhand eines in den Zeichnungen dargestellten Ausführungsbeispiels näher erläutert. Es zeigen:
- Figur 1: in der Draufsicht ein Rohrprofil als Querträger für eine Verbundlenkerhinterachse eines Personenkraftwagens und
- Figuren 2 bis 5: diverse Querschnitte durch das Rohrprofil der Figur 1 entlang der Linien II-II, III-III. IV-IV und V-V.

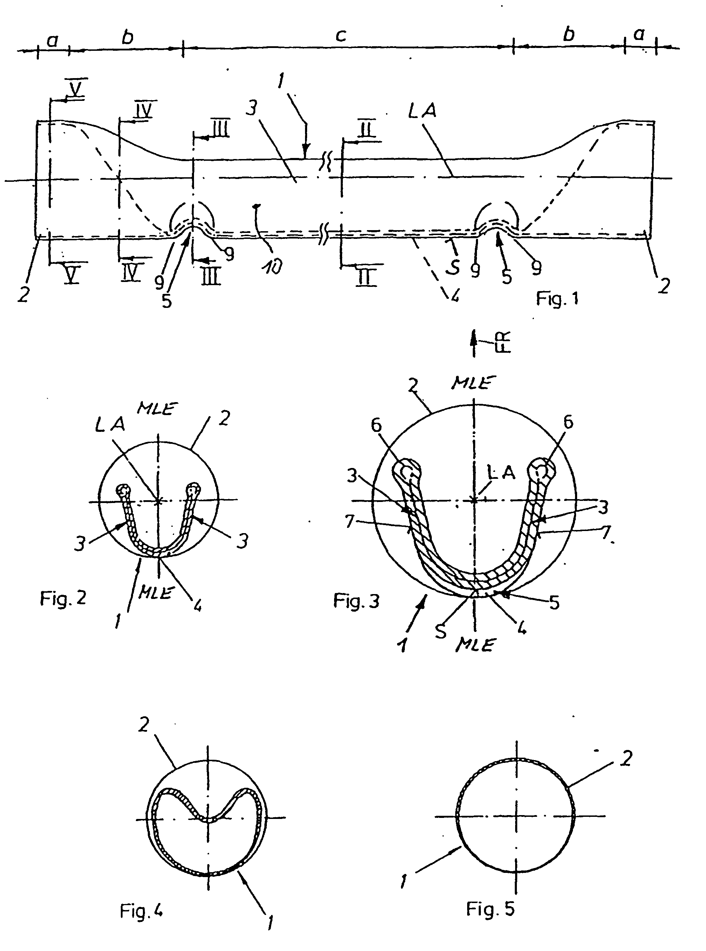

In der Figur 1 ist mit 1 ein Rohrprofil als Querträger für eine ansonsten nicht näher veranschaulichte Verbundlenkerhinterachse eines Personenkraftwagens bezeichnet. Das Rohrprofil 1 ist aus einem ursprünglich runden Rohr (Figur 5) hergestellt, das aus einem Vergütungsstahl der Werkstoffqualität 22MnB5 besteht.

Durch spanlose Kaltumformung wird der Querschnitt des Rohrprofils 1 in den Endabschnitten a aufrechterhalten. Dieser kreisrunde Querschnitt an den Enden 2 des Rohrprofils 1 in den Endabschnitten a geht jedoch in den Übergangsabschnitten b kontinuierlich in einen U-förmigen doppelwandigen Querschnitt über, der sich über den mittleren Längenabschnitt c des Rohrprofils 1 erstreckt (Figuren 1 bis 5).

Unter der Annahme, dass das Rohrprofil 1 gemäß Figur 1 in der Draufsicht, das heißt in der Einbaulage im Personenkraftwagen dargestellt ist, erstrecken sich die Schenkel 3 des mittleren U-förmigen Längenabschnitts c (Figuren 2 und 3) von einem bogenförmigen Steg 4 aus unter leichter Divergenz bezüglich der durch die Längsachse LA verlaufenden horizontalen Mittellängsebene MLE des Rohrprofils 1 in Fahrtrichtung FR.

Das Rohrprofil 1 ist endseitig des mittleren U-förmigen Längenabschnitts c mit sich in Querrichtung des Rohrprofils 1 erstreckenden sickenartigen Einprägungen 5 versehen. Die Figur 3 zeigt hierbei, dass die Einprägungen 5 ihre größte Tiefe am in der horizontalen Mittellängsebene MLE liegenden Scheitel S des U-förmigen Längenabschnitts c aufweisen. Ihre Tiefe verringert sich in Richtung auf die freien Enden 6 der Schenkel 3, bis sie gleichmäßig in die äußere Oberfläche 7 der Schenkel 3 einlaufen. Im Längsschnitt gesehen haben die Einprägungen 5 mithin eine sichelförmige Konfiguration.

Die Ränder 9 der Einprägungen 5 sind abgerundet.

Nach dem Kaltumformen eines kreisrunden Rohrs aus einem Vergütungsstahl der Werkstoffqualität 22MnB5 wird das dann vorliegende Rohrprofil 1 gemäß den Figuren 1 bis 5 in den Übergangsabschnitten b bei einem Temperaturniveau von etwa 930 °C geglüht. Dann wird das Rohrprofil 1 mit einer oberhalb des AC3-Punkts liegenden Temperatur in Wasser gehärtet und anschließend mit einer Temperatur von etwa 280 °C über einen Zeitraum von 20 Minuten angelassen. Danach wird das Rohrprofil 1 hinsichtlich seiner äußeren Oberfläche 10 mit Stahlkugeln bestrahlt und schließlich der Weiterkonfiguration zur Fertigstellung einer Verbundlenkerhinterachse zugeführt.

### Bezugszeichenaufstellung

- 1 -: Rohrprofil
- 2 -: Enden v. 1
- 3 -: Schenkel v. c
- 4 -: Steg v. c
- 5 -: Einprägungen an 1
- 6 -: Enden v. 3
- 7 -: äußere Oberfläche v. 3
- 8 -: innere Oberfläche v. 3
- 9 -: Ränder v. 5
- 10 -: Oberfläche v. 1

- a -: Endabschnitte v. 1
- b -: Übergangsabschnitte v. 1
- c -: mittlerer Längenabschnitt v. 1
- FR -: Fahrtrichtung
- LA -: Längsachse v. 1
- MLE -: Mittellängsebene v. 1
- S -: Scheitel v. 1

## Patentansprüche

1. Verfahren zur Herstellung eines biegesteifen torsionsweichen Rohrprofils (1) als Querträger für eine Verbundlenkerhinterachse eines Personenkraftwagens, bei welchem ein Rohr aus einem Vergütungsstahl unter Sicherstellung torsionssteifer Endabschnitte (a) zunächst im mittleren Längenabschnitt (c) durch eine U-förmige Kaltverformung torsionsweich gestaltet wird, worauf das derart gestaltete Rohrprofil (1) mindestens in Teilabschnitten (b) bei einem Temperaturniveau zwischen 850 °C und 960 °C geglüht, dann mit einer oberhalb des AC3-Punkts liegenden Temperatur in Wasser gehärtet, anschließend mit einer Temperatur in Wasser gehärtet, anschließend mit einer Temperatur zwischen 200 °C und 550 °C über einen Zeitraum von > 5 Minuten angelassen, danach wenigstens einer äußeren Oberflächenverfestigung unterworfen und schließlich einer Weiterkonfiguration zur Fertigstellung einer Verbundlenkerhinterachse zugeführt wird.

2. Verfahren nach Patentanspruch 1, bei welchem das Rohrprofil (1) bei einem Temperaturniveau zwischen 920 °C und 950 °C, insbesondere etwa 930 °C, geglüht wird.

3. Verfahren nach Patentanspruch 1 oder 2, bei welchem das geglühte Rohrprofil (1) mit einer Temperatur von etwa 280 °C über einen Zeitraum von ca. 20 Minuten angelassen wird.

4. Verfahren nach einem der Patentansprüche 1 bis 3, bei welchem zur Herstellung des Rohrprofils (1) als Querträger ein Rohr mit der Werkstoffqualität 22MnB5 bereitgestellt wird.

5. Verfahren nach einem der Patentansprüche 1 bis 4, bei welchem die Warmbehandlung des kaltverformten Rohrprofils (1) in den Übergangsabschnitten (b) zwischen dem U-förmig Längenabschnitt (c) und den torsionssteifen Endabschnitten (a) durchgeführt wird.

6. Verfahren nach einem der Patentansprüche 1 bis 5, bei welchem das warmbehandelte Rohrprofil (1) durch Bestrahlen mit Kugeln, insbesondere mit Stahlkugeln, an der äußeren Oberfläche (10) verfestigt wird.

## Claims

1. A process for manufacturing a tubular profile (1) resistant to bending and flexible in torsion as a cross-member for a dead beam rear axle of a private motor vehicle, wherein a tube consisting of a heat-treatable steel is first made flexible in torsion in the central length portion (c) by a U-shaped cold deformation, while ensuring that the end portions (a) are resistant to torsion, whereupon the tubular profile (1) thus made is annealed at least in partial portions (b) at a temperature level between 850°C and 960°C, and then hardened in water at a temperature above the AC3 point, then hardened with a temperature in water and then tempered at a temperature between 200°C and 550°C over a period of more than 5 minutes, and then subjected to at least an external surface compaction, and finally is subjected to further configuration to complete a dead beam rear axle.

2. A process according to claim 1, wherein the tubular profile (1) is annealed at a temperature level between 920°C and 950°C, particularly about 930°C.

3. A process according to claim 1 or 2, wherein the annealed tubular profile (1) is tempered at a temperature of about 280°C over a period of about 20 minutes.

4. A process according to any one of claims 1 to 3, wherein a tube having material quality 22MnB5 is used to make the tubular profile (1) as a cross-member.

5. A process according to any one of claims 1 to 4, wherein the heat treatment of the cold-deformed tubular profile (1) is carried out in the transitional portions (b) between the U-shaped length portion (c) and the torsion-resistant end portions (a).

6. A process according to any one of claims 1 to 5, wherein the heat-treated tubular profile (1) is compacted at its outer surface (10) by blasting with balls, particularly steel balls.

## Revendications

1. Procédé pour la fabrication d'un profilé tubulaire (1) rigide en flexion et souple en torsion à titre de traverse pour un essieu arrière directeur composite d'un véhicule automobile, dans lequel un tube en acier de qualité est tout d'abord rendu souple à la torsion dans un tronçon longitudinal médian (c) par déformation à froid en forme de U, tout en assurant des tronçons terminaux (a) rigides en torsion, suite à quoi le profilé tubulaire (1) ainsi réalisé est porté au rouge au moins dans des tronçons partiels (b) à un niveau de température entre 850 et 960 °C, puis trempé dans de l'eau à une température située au-dessus du point AC3, et ensuite trempé dans de l'eau à une certaine température, et ensuite ramené à une température entre 200 et 550 °C pendant une période supérieure à cinq minutes, et ensuite soumis à au moins une consolidation de surface, et enfin amené à une configuration successive pour terminer un essieu arrière directeur composite.

2. Procédé selon la revendication 1, dans lequel le profilé tubulaire (1) est porté au rouge à un niveau de température entre 920 est 950 °C, en particulier environ 930 °C.

3. Procédé selon l'une ou l'autre des revendications 1 est 2, dans lequel le profilé tubulaire porté au rouge (1) est ramené à une température d'environ 280 °C sur une période d'environ 20 minutes.

4. Procédé selon l'une des revendications 1 à 3, dans lequel on utilise un tube avec matériau de qualité 22MnB5 pour réaliser le profilé tubulaire (1) à titre de traverse.

5. Procédé selon l'une des revendications 1 à 4, dans lequel le traitement thermique du profilé tubulaire (1) déformé à froid est exécuté dans les tronçons de transition (b) entre le tronçon longitudinal (c) en forme de U et les tronçons terminaux (a) rigides en torsion.

6. Procédé selon l'une des revendications 1 à 5, dans lequel le profilé tubulaire (1) traité à chaud est consolidé par projection de billes, en particulier de billes en acier, sur la surface extérieure (10).
